# EUROPÄISCHE PATENTSCHRIFT

(11) **EP 3 824 060 B1**
(45) Veröffentlichungstag und Bekanntmachung des Hinweises auf die Patenterteilung: **27.03.2024**
(21) Anmeldenummer: 19720558.6
(22) Anmeldetag: 26.04.2019
(51) Int. Cl.: C11D 3/20, C11D 3/50, C11D 7/26, C11D 11/00

(54) **VERFAHREN ZUR HERSTELLUNG EINER FESTEN PARFÜMHALTIGEN ZUSAMMENSETZUNG**
PROCESS FOR MAKING A SOLID FRAGRANCE-CONTAINING COMPOSITION
PROCÉDÉ POUR LA PREPARATION D'UNE COMPOSITION SOLIDE CONTENANT DU PARFUM

(30) Priorität: 17.07.2018 DE 102018211830
(43) Veröffentlichungstag der Anmeldung: 26.05.2021
(73) Patentinhaber: Henkel AG & Co. KGaA, 40589 Düsseldorf (DE)
(72) Erfinder: PANZICA, Danilo, 40721 Hilden (DE); HOLDERBAUM, Thomas, 40723 Hilden (DE); SCHMIEDEL, Peter, 40591 Düsseldorf (DE)
(74) Vertreter: dompatent von Kreisler Selting Werner - Partnerschaft von Patent- und Rechtsanwälten mbB
(86) Internationale Anmeldenummer: PCT/EP2019/060793
(87) Internationale Veröffentlichungsnummer: WO 2020/015878

(56) Entgegenhaltungen:
- EP-A1- 0 816 468
- EP-B1- 0 816 468
- WO-A1-2019/120958
- DE-A1-102007 007 310
- DE-A1-102013 224 448
- DE-A1-102016 219 294
- US-B1- 9 347 022

## Beschreibung

Die vorliegende Erfindung betrifft ein Verfahren zur Herstellung fester, partikulärer Zusammensetzung umfassend mindestens ein wasserlösliches Trägermaterial und mindestens einen Duftstoff, wobei das Trägermaterial Natriumacetat Trihydrat ist, dessen Wasserdampf-Partialdruck bei etwa 58°C dem H₂O-Partialdruck der gesättigten Lösung dieses Salzes entspricht, so dass das Salz bei dieser Temperatur im eigenen Kristallwasser schmilzt. Die Zusammensetzung zeichnet sich dadurch aus, dass sie gegenüber bekannten Zusammensetzungen auf Polyethylenglykol-Basis eine deutlich verbesserte Wasserlöslichkeit aufweist.

Bei der Anwendung von Wasch- und Reinigungsmitteln verfolgt der Verbraucher nicht nur das Ziel, die zu behandelnden Objekte zu waschen, zu reinigen oder zu pflegen, sondern er wünscht sich auch, dass die behandelten Objekte, wie z.B. Textilien, nach der Behandlung, beispielsweise nach der Wäsche, angenehm riechen. Insbesondere aus diesem Grunde enthalten die meisten kommerziell verfügbaren Wasch- und Reinigungsmittel Duftstoffe.

Oftmals werden Duftstoffe in Form von Duftstoffpartikeln entweder als integraler Bestandteil eines Wasch- oder Reinigungsmittels verwendet, oder aber direkt zu Beginn eines Waschgangs in separater Form in die Waschtrommel dosiert. Auf diese Weise kann der Verbraucher durch individuelle Dosierung die Beduftung der zu waschenden Wäsche kontrollieren.

Bei dem Hauptbestandteil derartiger im Stand der Technik bekannter Duftpastillen handelt es sich typischerweise um ein wasserlösliches oder zumindest wasserdispergierbares Trägerpolymer, wie Polyethylenglykol (PEG), welches als Vehikel für die integrierten Duftstoffe dient und welches sich im Zuge des Wachsvorgangs in der Waschflotte mehr oder weniger vollständig auflöst, um so die enthaltenen Duftstoffe sowie gegebenenfalls weitere Komponenten in die Waschflotte zu entlassen. Für die Herstellung der bekannten Duftpastillen wird aus dem Trägerpolymer eine Schmelze erzeugt, die die übrigen Inhaltsstoffe enthält bzw. diese dann hinzugefügt werden, und die erhaltene Schmelze wird dann einem Formgebungsverfahren zugeführt, in dessen Verlauf sie abkühlt, dabei erstarrt und die gewünschte Form einnimmt.

Die bekannten Produkte haben den Nachteil, dass die verwendeten Polymermaterialien, insbesondere PEG, eine verzögerte Löslichkeit aufweisen, was insbesondere bei kurzen Waschgängen, niedriger Temperatur oder sonstigen ungünstigen Bedingungen zu Rückständen auf der Wäsche oder in der Waschmaschine führen kann.

Aufgabe der vorliegenden Erfindung war es daher, Verfahren zur Herstellung einer alternativen Zusammensetzung zu identifizieren, welche einen geeigneten Verarbeitungsbereich zeigt und gleichzeitig in den üblichen Temperaturbereichen, in denen gearbeitet wird, eine verbesserte Wasserlöslichkeit aufweist.

Eine weitere Aufgabe der Erfindung war es, Verfahren bereitzustellen, welche robust, das heißt ohne häufige und/oder lang andauernde Unterbrechungen verlaufen. Insbesondere sollten diese Verfahren ein Minimum an Instandhaltung und Reinigung der Verfahrensapparaturen erfordern.

Lösungsvorschläge für die zuvor genannten technischen Aufgabe offenbart die deutsche Patentanmeldung DE 10 2007 007 310 A1. Duftstoffhaltige Teilchen und Verfahren zu deren Herstellung sind in US9347022 B1 und DE102016219294 A1 offenbart.

Die Aufgabe wurde erfindungsgemäß gelöst durch eine Formulierung für Schmelzkörper, welche als Trägermaterial auf Natriumacetat Trihydrat basieren, welches vor der Umformung in Schmelzkörper zu einer Schmelze mit einem spezifischen Gewichtsverhältnis von Wasser zu Natriumacetat aufgeschmolzen wird.

Ein erster Gegenstand dieser Anmeldung ist ein Verfahren, umfassend:
a) Erzeugen einer Schmelze von Natriumacetat Trihydrat;
b) gegebenenfalls Zudosieren weiterer optionaler Inhaltsstoffe;
c) Zudosieren mindestens eines Parfümöls und/oder Duftstoffkapseln
d) Zuleiten der Schmelze zu einem Tropfenformer mit rotierender, gelochter Außentrommel;
e) Ausbringen von Tropfen der Schmelze auf ein Kühlband mittels des Tropfenformers,
wobei das aus dem Tropfenformer ausgebrachte Gemisch ein Gewichtsverhältnis von Wasser zu Natriumacetat von 0,63 oder darüber aufweist.

"Mindestens ein", wie hierin verwendet, bezieht sich auf 1 oder mehr, beispielsweise 1, 2, 3, 4, 5, 6, 7, 8, 9 oder mehr. Insbesondere bezieht sich diese Angabe auf die Art des Mittels/der Verbindung und nicht die absolute Zahl der Moleküle. "Mindestens ein Duftstoff", bedeutet daher, dass mindestens eine Art von Duftstoff erfasst wird, aber auch 2 oder mehr verschiedene Arten von Duftstoffen enthalten sein können.

In dem erfindungsgemäßen Verfahren wird eine Schmelze von Natriumacetat Trihydrat mittels eines Tropfenformers auf ein Kühlband ausgebracht. Der Begriff "Schmelze" bezeichnet den flüssigen Zustand des Natriumacetat Trihydrats, welchen dieser bei Überschreiten der Temperatur einnimmt, bei der das Natriumacetat Kristallwasser abspaltet und sich in diesem Kristallwasser auflöst. Für Natriumacetat-Trihydrat (Na(CH₃COO) · 3H₂O), liegt diese Temperatur bei etwa 58°C.

Die Schmelze von Natriumacetat-Trihydrat in Schritt a) des Verfahrens kann durch demnach durch erwärmen von Natriumacetat-Trihydrat auf Temperaturen oberhalb 58°C erhalten werden. Alternativ kann diese Schmelze durch Lösen von wasserfreiem Natriumacetat in einer ausreichenden Menge Wasser bei Temperaturen oberhalb 58°C hergestellt werden.

Im Natriumacetat-Trihydrat beträgt des Gewichtsverhältnis von Wasser (Mw 18.02) zu Natriumacetat (Mw 82,03) 0,659. Kennzeichnend für das erfindungsgemäße Verfahren ist ein Gewichtsverhältnis von Wasser zu Natriumacetat von 0,63 oder darüber. Besonders bevorzugt ist ein Gewichtsverhältnis von Wasser zu Natriumacetat von 0,67 oder darüber oder, mit anderen Worten ein ausgehend von Natriumacetat-Trihydrat überstöchiometrischer Wassergehalt der in Schritt e) auf das Kühlband ausgebrachten Schmelze. Das Gewichtsverhältnis von Wasser zu Natriumacetat von 0,67 oder darüber ist dem in Bezug auf die zugrundeliegenden technischen Aufgaben bereits vorteilhaften Gewichtsverhältnis von 0,63 hinsichtlich dieser Aufgaben überlegen.

Der Gewichtsanteil des Natriumacetat Trihydrats an dieser in Schritt e) ausgebrachten Schmelze beträgt, bezogen auf ihr Gesamtgewicht, 30 bis 95 Gew.-%, vorzugsweise von 40 bis 90 Gew.-%, insbesondere 45 bis 80 Gew.-%. Das Gewichtsverhältnis von Wasser zu Natriumacetat in der in Schritt a) erzeugten Schmelze und der aus dem Tropfenformer in Schritt e) ausgebrachten Schmelze beträgt vorzugsweise zwischen 0,67 und 0,75, bevorzugt zwischen 0,67 und 0,74 und insbesondere zwischen 0,68 und 0,72. Durch dieses spezifische Gewichtsverhältnis wird einerseits die Prozessstabilität erhöht und die Notwendigkeit von Verfahrensunterbrechungen für Instandhaltung und Reinigung minimiert, andererseits wird die Optik der Verfahrensprodukte und deren Lagerfähigkeit vorteilhaft beeinflusst.

Zur Verbesserung der Prozessierbarkeit und der Produktoptik kann der Schmelze im Verlaufe des Verfahrens, insbesondere jedoch vor Schritt e) mindestens ein Rheologiemodifikator zugesetzt werden, wobei sich organische wie anorganische Verbindungen als geeignet erwiesen haben.

Eine erste Gruppe bevorzugter organischer Rheologiemodifikator bilden die Cellulosen, insbesondere die mikrofibrillierten Cellulosen. Verfahren, in deren Verlauf ein organischer Rheologiemodifikator, vorzugsweise ein organischer Rheologiemodifikator aus der Gruppe der Cellulosen, insbesondere der mikrofibrillierten Cellulosen zudosiert wird, sind bevorzugt. Weiterhin ist es bevorzugt, das die in Schritt e) ausgebrachte Schmelze, bezogen auf ihr Gesamtgewicht, den organischen Rheologiemodifikator in einer Menge von 2,0 bis 40 Gew.%, vorzugsweise von 4,0 bis 35 Gew.-% enthält.

Als Alternative zu oder in Kombination mit den vorgenannten organischen Rheologiemodifikatoren sind anorganische Rheologiemodifikatoren einsetzbar. In einer bevorzugten Verfahrensvariante wird in Schritt b) ein anorganischer Rheologiemodifikator, vorzugsweise ein anorganischer Rheologiemodifikator aus der Gruppe der pyrogenen Kieselsäuren zudosiert. Anorganische Rheologiemodifikatoren sind in der in Schritt e) ausgebrachten Schmelze, bezogen auf deren Gesamtgewicht, in einer Menge von 0,5 bis 7,0 Gew.-%, vorzugsweise von 1,0 bis 5,0 Gew.-% enthalten.

Ebenfalls mit dem Ziel, die Prozessierbarkeit der Schmelze im Verlaufe des Verfahrens zu verbessern, wird der Schmelze in einer bevorzugten Verfahrensvariante in Schritt b) ein Emulgator, vorzugsweise ein Emulgator aus der Gruppe der nichtionischen Emulgatoren zudosiert. Emulgator ist in der in Schritt e) ausgebrachten Schmelze, bezogen auf deren Gesamtgewicht, in einer Menge von 0,2 bis 5,0 Gew.-%, vorzugsweise von 0,4 bis 3,0 Gew.-% enthalten.

In die in Schritt a) erzeugte Schmelze wird vorzugsweise mindestens ein Ästhetikum eindosiert. Bevorzugte Ästhetika sind die Duft- und Farbstoffe.

Bei einem Duftstoff handelt es sich um eine den Geruchsinn anregende, chemische Substanz. Um den Geruchssinn anregen zu können, sollte die chemische Substanz zumindest teilweise in der Luft verteilbar sein, d.h. der Duftstoff sollte bei 25°C zumindest in geringem Maße flüchtig sein. Ist der Duftstoff nun sehr flüchtig, klingt die Geruchsintensität dann schnell wieder ab. Bei einer geringeren Flüchtigkeit ist der Gerucheindruck jedoch nachhaltiger, d.h. er verschwindet nicht so schnell. In einer Ausführungsform weist der Duftstoff daher einen Schmelzpunkt auf, der im Bereich von -100°C bis 100°C, bevorzugt von -80°C bis 80°C, noch bevorzugter von -20°C bis 50°C, insbesondere von -30°C bis 20°C liegt. In einer weiteren Ausführungsform weist der Duftstoff einen Siedepunkt auf, der im Bereich von 25°C bis 400°C, bevorzugt von 50°C bis 380°C, mehr bevorzugt von 75°C bis 350°C, insbesondere von 100°C bis 330°C liegt.

Insgesamt sollte eine chemische Substanz eine bestimmte Molekülmasse nicht überschreiten, um als Duftstoff zu fungieren, da bei zu hoher Molekülmasse die erforderliche Flüchtigkeit nicht mehr gewährleitstet werden kann. In einer Ausführungsform weist der Duftstoff eine Molekülmasse von 40 bis 700 g/mol, noch bevorzugter von 60 bis 400 g/mol auf.

Der Geruch eines Duftstoffes wird von den meisten Menschen als angenehm empfunden und entspricht häufig dem Geruch nach beispielsweise Blüten, Früchten, Gewürzen, Rinde, Harz, Blättern, Gräsern, Moosen und Wurzeln. So können Duftstoffe auch dazu verwendet werden, um unangenehme Gerüche zu überlagern oder aber auch um einen nicht riechenden Stoff mit einem gewünschten Geruch zu versehen. Als Duftstoffe können einzelne Riechstoffverbindungen, z.B. die synthetischen Produkte vom Typ der Ester, Ether, Aldehyde, Ketone, Alkohole und Kohlenwasserstoffe verwendet werden.

Duftstoffverbindungen vom Typ der Aldehyde sind beispielsweise Adoxal (2,6,10-Trimethyl-9-undecenal), Anisaldehyd (4-Methoxybenzaldehyd), Cymal (3-(4-Isopropyl-phenyl)-2-methylpropanal), Ethylvanillin, Florhydral (3-(3-isopropylphenyl)butanal), Helional (3-(3,4-Methylendioxyphenyl)-2-methylpropanal), Heliotropin, Hydroxycitronellal, Lauraldehyd, Lyral (3- und 4-(4-Hydroxy-4-methylpentyl)-3- cyclohexen-1-carboxaldehyd), Methylnonylacetaldehyd, Lilial (3-(4-tert-Butylphenyl)-2-methylpropanal), Phenylacetaldehyd, Undecylenaldehyd, Vanillin, 2,6,10-Trimethyl-9-undecenal, 3-Dodecen-1-al, alpha-n-Amylzimtaldehyd, Melonal (2,6-Dimethyl-5-heptenal), 2,4-Di-methyl-3-cyclohexen-1-carboxaldehyd (Triplal), 4-Methoxybenzaldehyd, Benzaldehyd, 3-(4-tert- Butylphenyl)-propanal, 2-Methyl-3-(para-methoxyphenyl)propanal, 2-Methyl-4-(2,6,6-timethyl-2(1)-cyclohexen-1-yl)butanal, 3-Phenyl-2-propenal, cis-/trans-3,7-Dimethyl-2,6-octadien-1-al, 3,7-Dimethyl-6-octen-1-al, [(3,7-Dimethyl-6-octenyl)oxy]acetaldehyd, 4-Isopropylbenzylaldehyd, 1,2,3,4,5,6,7,8-Octahydro-8,8-dimethyl-2-naphthaldehyd, 2,4-Dimethyl-3-cyclohexen-1-carboxaldehyd, 2-Methyl-3-(isopropylphenyl)propanal, 1-Decanal, 2,6-Dimethyl-5-heptenal, 4-(Tricyclo[5.2.1.0(2,6)]-decyliden-8)-butanal, Octahydro-4,7-methan-1H-indencarboxaldehyd, 3-Ethoxy-4-hydroxybenzaldehyd, para-Ethyl-alpha,alpha-dimethylhydrozimtaldehyd, alpha-Methyl-3,4-(methylendioxy)-hydrozimtaldehyd, 3,4-Methylendioxybenzaldehyd, alpha-n-Hexylzimtaldehyd, m-Cymen-7-carboxaldehyd, alpha-Methylphenylacetaldehyd, 7-Hydroxy-3,7-dimethyloctanal, Undecenal, 2,4,6-Trimethyl-3-cyclohexen-1-carboxaldehyd, 4-(3)(4-Methyl-3-pentenyl)-3-cyclohexencarboxaldehyd, 1-Dodecanal, 2,4-Dimethylcyclohexen-3-carboxaldehyd, 4-(4-Hydroxy-4-methylpentyl)-3-cylohexen-1-carboxaldehyd, 7-Methoxy-3,7-dimethyloctan-1-al, 2-Methyl- undecanal, 2-Methyldecanal, 1-Nonanal, 1-Octanal, 2,6,10-Trimethyl-5,9-undecadienal, 2-Methyl-3-(4-tert-butyl)propanal, Dihydrozimtaldehyd, 1-Methyl-4-(4-methyl-3-pentenyl)-3-cyclohexen-1-carboxaldehyd, 5- oder 6-Methoxyhexahydro-4,7-methanindan-1- oder -2-carboxaldehyd, 3,7-Dimethyloctan-1-al, 1-Undecanal, 10-Undecen-1-al, 4-Hydroxy-3-methoxybenzaldehyd, 1-Methyl-3-(4-methylpentyl)-3-cyclohexencarboxaldehyd, 7-Hydroxy-3J-dimethyl-octanal, trans-4-Decenal, 2,6-Nonadienal, para-Tolylacetaldehyd, 4-Methylphenylacetaldehyd, 2-Methyl-4-(2,6,6-trimethyl-1-cyclohexen-1-yl)-2-butenal, ortho-Methoxyzimtaldehyd, 3,5,6-Trimethyl-3-cyclohexen- carboxaldehyd, 3J-Dimethyl-2-methylen-6-octenal, Phenoxyacetaldehyd, 5,9-Dimethyl-4,8- decadienal, Päonienaldehyd (6,10-Dimethyl-3-oxa-5,9-undecadien-1-al), Hexahydro-4,7-methanindan-1-carboxaldehyd, 2-Methyloctanal, alpha-Methyl-4-(1-methylethyl)benzolacetaldehyd, 6,6-Dimethyl-2-norpinen-2-propionaldehyd, para-Methylphenoxyacetaldehyd, 2-Methyl-3-phenyl-2-propen-1-al, 3,5,5-Trimethylhexanal, Hexahydro-8,8-dimethyl-2-naphthaldehyd, 3-Propyl-bicyclo-[2.2.1]-hept-5-en-2-carbaldehyd, 9-Decenal, 3-Methyl-5-phenyl-1-pentanal, Methylnonylacetaldehyd, Hexanal und trans-2-Hexenal.

Duftstoffverbindungen vom Typ der Ketone sind beispielsweise Methyl-beta-naphthylketon, Moschusindanon (1,2,3,5,6,7-Hexahydro-1,1,2,3,3- pentamethyl-4H-inden-4-on), Tonalid (6-Acetyl-1,1,2,4,4,7-hexamethyltetralin), alpha-Damascon, beta-Damascon, delta-Damascon, iso-Damascon, Damascenon, Methyldihydrojasmonat, Menthon, Carvon, Kampfer, Koavon (3,4,5,6,6-Pentamethylhept-3-en-2-on), Fenchon, alpha-lonon, beta- lonon, gamma-Methyl-lonon, Fleuramon (2-heptylcyclopen-tanon), Dihydrojasmon, cis-Jasmon, iso-E-Super (1-(1,2,3,4,5,6J,8-octahydro-2,3,8,8-tetramethyl-2-naphthalenyl)-ethan-1-on (und Isomere)), Methylcedrenylketon, Acetophenon, Methylacetophenon, para-Methoxyacetophenon, Methyl-beta-naphtylketon, Benzylaceton, Benzophenon, para-Hydroxyphenylbutanon, Sellerie- Keton(3-methyl-5-propyl-2-cyclohexenon), 6-Isopropyldecahydro-2-naphton, Dimethyloctenon, Frescomenthe (2-butan-2-yl-cyclohexan-1-on), 4-(1-Ethoxyvinyl)-3,3,5,5-tetramethylcyclohexanon, Methylheptenon, 2-(2-(4-Methyl-3-cyclohexen-1-yl)propyl)cyclopentanon, 1-(p-Menthen-6(2)yl)-1-propanon, 4-(4-Hydroxy-3-methoxyphenyl)-2-butanon, 2-Acetyl-3,3-dimethylnorbornan, 6,7- Dihydro-1,1,2,3,3-pentamethyl-4(5H)-indanon, 4-Damascol, Dulcinyl(4-(1,3-benzodioxol-5-yl) butan-2-on), Hexalon (1-(2,6,6-trimethyl-2-cyclohexene-1-yl)-1,6-heptadien-3-on), IsocyclemonE(2-acetonaphthon-1,2,3,4,5,6,7,8-octahydro-2,3,8,8-tetramethyl), Methylnonylketon, Methylcyclocitron, Methyllavendelketon, Orivon (4-tert-Amyl-cyclohexanon), 4-tert-Butylcyclohexanon, Delphon (2-pentyl-cyclopentanon), Muscon (CAS 541-91-3), Neobutenon (1-(5,5-dimethyl-1- cyclohexenyl)pent-4-en-1-on), Plicaton (CAS 41724-19-0), Velouton (2,2,5-Trimethyl-5-pentylcyclopentan-1-on),2,4,4,7-Tetramethyl-oct-6-en-3-on und Tetrameran (6,10- Dimethylundecen-2-on).

Duftstoffverbindungen vom Typ der Alkohole sind beispielsweise 10-Undecen-1-ol, 2,6-Dimethylheptan-2-ol, 2-Methyl-butanol, 2-Methylpentanol, 2- Phenoxyethanol, 2-Phenylpropanol, 2-tert.-Butycyclohexanol, 3,5,5-Trimethylcyclohexanol, 3-Hexanol, 3-Methyl-5-phenyl-pentanol, 3-Octanol, 3-Phenyl-propanol, 4-Heptenol, 4-Isopropyl- cyclohexanol, 4-tert.-Butycyclohexanol, 6,8-Dimethyl-2-nona-nol, 6-Nonen-1-ol, 9-Decen-1-ol, α-Methylbenzylalkohol, α-Terpineol, Amylsalicylat, Benzylalkohol, Benzylsalicylat, β-Terpineol, Butylsalicylat, Citronellol, Cyclohexylsalicylat, Decanol, Dihydromyrcenol, Dimethylbenzylcarbinol, Dimethylheptanol, Dimethyloctanol, Ethylsalicylat, Ethylvanilin, Eugenol, Farnesol, Geraniol, Heptanol, Hexylsalicylat, Isoborneol, Isoeugenol, Isopulegol, Linalool, Menthol, Myrtenol, n-Hexanol, Nerol, Nonanol, Octanol, p-Menthan-7-ol, Phenylethylalkohol, Phenol, Phenylsalicylat, Tetrahydrogeraniol, Tetrahydrolinalool, Thymol, trans-2-cis-6-Nonadicnol, trans-2-Nonen-1-ol, trans-2-Octenol, Undecanol, Vanillin, Champiniol, Hexenol und Zimtalkohol.

Duftstoffverbindungen vom Typ der Ester sind z.B. Benzylacetat, Phenoxyethylisobutyrat, p-tert-Butylcyclohexylacetat, Linalylacetat, Dimethylbenzylcarbinylacetat (DMBCA), Phenylethylacetat, Benzylacetat, Ethylmethylphenyl- glycinat, Allylcyclohexylpropionat, Styrallylpropionat, Benzylsalicylat, Cyclohexylsalicylat, Floramat, Melusat und Jasmacyclat.

Zu den Ethern zählen beispielsweise Benzylethylether und Ambroxan. Zu den Kohlenwasserstoffen gehören hauptsächlich Terpene wie Limonen und Pinen.

Bevorzugt werden Mischungen verschiedener Duftstoffe verwendet, die gemeinsam eine ansprechende Duftnote erzeugen. Ein derartiges Gemisch an Duftstoffen kann auch als Parfüm oder Parfümöl bezeichnet werden. Solche Parfümöle können auch natürliche Duftstoffgemische enthalten, wie sie aus pflanzlichen Quellen zugänglich sind.

Zu den Duftstoffen pflanzlichen Ursprungs zählen ätherische Öle wie Angelikawurzelöl, Anisöl, Arnikablütenöl, Basilikumöl, Bayöl, Champacablütenöl, Citrusöl, Edeltannenöl, Edeltannenzapfenöl, Elemiöl, Eukalyptusöl, Fenchelöl, Fichtennadelöl, Galbanumöl, Geraniumöl, Gingergrasöl, Guajakholzöl, Gurjunbalsamöl, Helichrysumöl, Ho-Öl, Ingweröl, Irisöl, jasminöl, Kajeputöl, Kalmusöl, Kamillenöl, Kampferöl, Kanagaöl, Kardamomenöl, Kassiaöl, Kiefernnadelöl, Kopaivabalsamöl, Korianderöl, Krauseminzeöl, Kümmelöl, Kuminöl, Labdanumöl, Lavendelöl, Lemongrasöl, Lindenblütenöl, Limettenöl, Mandarinenöl, Melissenöl, Minzöl, Moschuskörneröl, Muskatelleröl, Myrrhenöl, Nelkenöl, Neroliöl, Niaouliöl, Olibanumöl, Orangenblütenöl, Orangenschalenöl, Origanumöl, Palmarosaöl, Patschuliöl, Perubalsamöl, Petitgrainöl, Pfefferöl, Pfefferminzöl, Pimentöl, Pine-Öl, Rosenöl, Rosmarinöl, Salbeiöl, Sandelholzöl, Sellerieöl, Spiköl, Sternanisöl, Terpentinöl, Thujaöl,

Thymianöl, Verbenaöl, Vetiveröl, Wacholderbeeröl, Wermutöl, Wintergrünöl, Ylang-Ylang-Öl, Ysop-Öl, Zimtöl, Zimtblätteröl, Zitronellöl, Zitronenöl sowie Zypressenöl sowie Ambrettolid, Ambroxan, alpha-Amylzimtaldehyd, Anethol, Anisaldehyd, Anisalkohol, Anisol, Anthranilsäuremethylester, Acetophenon, Benzylaceton, Benzaldehyd, Benzoesäureethylester, Benzophenon, Benzylalkohol, Benzylacetat, Benzylbenzoat, Benzylformiat, Benzylvalerianat, Borneol, Bornylacetat, Boisambrene forte, alpha-Bromstyrol, n-Decylaldehyd, n-Dodecylaldehyd, Eugenol, Eugenolmethylether, Eukalyptol, Farnesol, Fenchon, Fenchylacetat, Geranylacetat, Geranylformiat, Heliotropin, Heptincarbonsäuremethylester, Heptaldehyd, Hydrochinon-Dimethylether, Hydroxyzimtaldehyd, Hydroxyzimtalkohol, Indol, Iron, Isoeugenol, Isoeugenolmethylether, Isosafrol, Jasmon, Kampfer, Karvakrol, Karvon, p-Kresolmethylether, Cumarin, p-Methoxyacetophenon, Methyl-n-amylketon, Methylanthranilsäuremethylester, p-Methylacetophenon, Methylchavikol, p-Methylchinolin, Methyl-beta-naphthylketon, Methyl-n-nonylacetaldehyd, Methyl-n-nonylketon, Muskon, beta-Naphtholethylether, beta-Naphthol-methylether, Nerol, n-Nonylaldehyd, Nonylalkohol, n-Octylaldehyd, p-Oxy-Acetophenon, Pentadekanolid, beta-Phenylethylalkohol, Phenylessigsäure, Pulegon, Safrol, Salicylsäureisoamylester, Salicylsäuremethylester, Salicylsäurehexylester, Salicylsäurecyclohexylester, Santalol, Sandelice, Skatol, Terpineol, Thymen, Thymol, Troenan, gamma-Undelacton, Vanillin, Veratrumaldehyd, Zimtaldehyd, Zimtalkohol, Zimtsäure, Zimtsäureethylester, Zimtsäurebenzylester, Diphenyloxid, Limonen, Linalool, Linalylacetat und - Propionat, Melusat, Menthol, Menthon, Methyl-n-heptenon, Pinen, Phenylacetaldehyd, Terpinylacetat, Citral, Citronellal, sowie Mischungen daraus.

In einer bevorzugten Verfahrensvariante wird in Schritt c) Parfümöl zudosiert. Vorzugsweise enthält die in Schritt e) ausgebrachte Schmelze, bezogen auf ihr Gesamtgewicht, das Parfümöl in einer Menge von 0,01 bis 2,0 Gew.-%, vorzugsweise von 0,05 bis 1,0 Gew.%.

In einer Ausführungsform kann es bevorzugt sein, dass zumindest ein Teil des Duftstoffs als Duftstoffvorläufer oder in verkapselter Form (Duftstoffkapseln), insbesondere in Mikrokapseln, eingesetzt wird. Bei den Mikrokapseln kann es sich um wasserlösliche und/oder wasserunlösliche Mikrokapseln handeln. Es können beispielsweise Melamin-Harnstoff-Formaldehyd-Mikrokapseln, Melamin-Formaldehyd-Mikrokapseln, Harnstoff-Formaldehyd-Mikrokapseln oder Stärke-Mikrokapseln eingesetzt werden. "Duftstoffvorläufer" bezieht sich auf Verbindungen, die erst nach chemischer Umwandlung/Spaltung, typischerweise durch Einwirkung von Licht oder anderen Umgebungsbedingungen, wie pH-Wert, Temperatur, etc., den eigentlichen Duftstoff freisetzen. Derartige Verbindungen werden häufig auch als Duftspeicherstoffe oder "Pro-Fragrance" bezeichnet.

Weitere bevorzugte Verfahrensvarianten sind dadurch gekennzeichnet, dass Duftstoffkapseln eingesetzt werden. Es ist weiterhin bevorzugt, wenn die in Schritt e) ausgebrachte Schmelze, bezogen auf ihr Gesamtgewicht, die Duftstoffkapseln in einer Menge von 0,1 bis 5,0 Gew.- %, vorzugsweise von 0,2 bis 3,5 Gew.-% enthält.

Um den optischen Eindruck der Verfahrensprodukte zu verbessern, kann der in Schritt a) erzeugten Schmelze ein Farbstoff zugefügt werden. Bevorzugte Farbstoffe, deren Auswahl dem Fachmann keinerlei Schwierigkeit bereitet, sollten eine hohe Lagerstabilität und Unempfindlichkeit gegenüber üblichen Inhaltsstoffen der Wasch- oder Reinigungsmittel und gegen Licht sowie keine ausgeprägte Substantivität gegenüber Textilfasern aufweisen, um diese nicht anzufärben.

Vorzugsweise ist der Farbstoff ausgewählt aus Acid Red 18 (CI 16255), Acid Red 26, Acid Red 27, Acid Red 33, Acid Red 51, Acid Red 87, Acid Red 88, Acid Red 92, Acid Red 95, Acid Red 249 (CI 18134), Acid Red 52 (CI 45100), Acid Violet 126, Acid Violet 48, Acid Violet 54, Acid Yellow 1, Acid Yellow 3 (CI 47005), Acid Yellow 11, Acid Yellow 23 (CI 19140), Acid Yellow 3, Direct Blue 199 (CI 74190), Direct Yellow 28 (CI 19555), Food Blue 2 (CI 42090), Food Blue 5:2 (CI 42051:2), Food Red 7(01 16255), Food Yellow 13 (CI 47005), Food Yellow 3 (CI 15985), Food Yellow 4 (CI 19140), Reactive Green 12, Solvent Green 7 (CI 59040).

Besonders bevorzugte Farbstoffe sind wasserlösliche Säurefarbstoffe, beispielsweise Food Yellow 13 (Acid Yellow 3, CI 47005), Food Yellow 4 (Acid Yellow 23, CI 19140), Food Red 7 (Acid Red 18, CI 16255), Food Blue 2 (Acid Blue 9, CI 42090), Food Blue 5 (Acid Blue 3, CI 42051), Acid Red 249 (CI 18134), Acid Red 52 (CI 45100), Acid Violet 126, Acid Violet48, Acid Blue 80(01 61585), Acid Blue 182, Acid Blue 182, Acid Green 25 (CI 61570), Acid Green 81.

Ebenso bevorzugt eingesetzt werden auch wasserlösliche Direktfarbstoffe, beispielsweise Direct Yellow 28 (CI 19555), Direct Blue 199 (CI 74190) und wasserlösliche Reaktiv-Farbstoffe, beispielsweise Reactive Green 12, sowie die Farbstoffe Food Yellow 3 (CI 15985), Acid Yellow 184.

Ebenso bevorzugt eingesetzt werden wässrige Dispersionen folgender Pigment-Farbstoffe, Pigment Black 7 (CI 77266), Pigment Blue 15 (CI 74160), Pigment Blue 15:1 (CI 74160), Pigment Blue 15:3 (CI 74160), Pigment Green 7 (CI 74260), Pigment Orange 5, Pigment Red 112 (CI 12370), Pigment Red 112 (CI 12370), Pigment Red 122 (CI 73915), Pigment Red 179 (CI 71130), Pigment Red 184 (CI 12487), Pigment Red 188 (CI 12467), Pigment Red 4 (CI 12085), Pigment Red 5 (CI 12490), Pigment Red 9, Pigment Violet 23 (CI 51319), Pigment Yellow 1 (CI 28 11680), Pigment Yellow 13 (CI 21100), Pigment Yellow 154, Pigment Yellow 3 (CI 11710), Pigment Yellow 74, Pigment Yellow 83 (CI 21108), Pigment Yellow 97. In bevorzugten Ausführungsformen werden folgende Pigmentfarbstoffe in Form von Dispersionen eingesetzt: Pigment Yellow 1 (CI 11680), Pigment Yellow 3 (CI 11710), Pigment Red 112 (CI 12370), Pigment Red 5 (CI 12490), Pigment Red 181 (CI 73360), Pigment Violet 23 (CI 51319), Pigment Blue 15:1 (CI 74160), Pigment Green 7 (CI 74260), Pigment Black 7 (CI 77266).

In ebenfalls bevorzugten Ausführungsformen werden wasserlösliche Polymerfarbstoffe, beispielsweise Liquitint, Liquitint Blue HP, Liquitint Blue MC, Liquitint Blue 65, Liquitint Cyan 15, Liquitint Patent Blue,Liquitint Violet 129, Liquitint Royal Blue, Liquitint Experimental Yellow 8949- 43, Liquitint Green HMC, Liquitint Yellow LP, Liquitint Yellow II und Mischungen daraus eingesetzt.

Besonders bevorzugt ist der Einsatz wasserlöslicher Farbstoffe, wobei wasserlösliche Polymerfarbstoffe ganz besonders bevorzugt eingesetzt werden.

Zur Gruppe der ganz besonders bevorzugten Farbstoffe zählen Acid Blue 3, Acid Yellow 23, Acid Red 33, Acid Violet 126, Liquitint Yellow LP, Liquitint Cyan 15, Liquitint Blue HP und Liquitint Blue MC.

Eine weitere bevorzugte Verfahrensvariante ist dadurch gekennzeichnet, dass der Schmelze als Ästhetikum ein Farbstoff, vorzugsweise ein wasserlöslicher Farbstoff, besonders bevorzugt ein wasserlöslicher Polymerfarbstoff zugesetzt wird. Es ist weiterhin bevorzugt, dass die in Schritt e) ausgebrachte Schmelze, bezogen auf ihr Gesamtgewicht, den Farbstoff in einer Menge von 0,001 bis 0,5 Gew.-%, vorzugsweise von 0,002 bis 0,2 Gew.-% enthält.

Aus Gründen der Verfahrensökonomie ist es bevorzugt, das mindestens eine Ästhetikum erst zu einem späten Verfahrenszeitpunkt in die Schmelze zu dosieren. Auf diese Weise wird bei einem Rezepturwechsel beispielsweise der Reinigungsaufwand und die auftretende Menge an verunreinigtem (nicht rezepturkonformen) Verfahrensprodukt minimiert. Eine bevorzugte Verfahrensvariante ist daher dadurch gekennzeichnet, dass die Schmelze in Schritt a) in einem ersten Behälter hergestellt und mittels einer Rohrleitung dem Tropfenformer zugeleitet wird, wobei das Ästhetikum der Schmelze in der Rohrleitung zwischen erstem Behälter und Tropfenformer zudosiert wird.

Wassermischbare organische Lösungsmittel sind ein weiteres bevorzugtes Verfahrensedukt. Die Lösungsmittel werden der Schmelze vorzugsweise vor Schritt e) zugesetzt.

Bevorzugte wassermischbare organische Lösungsmittel stammen aus der Gruppe Ethanol, n-Propanol, i-Propanol, Butanolen, Glykol, Propandiol, Butandiol, Methylpropandiol, Glycerin, Proplyencarbonat, Diglykol, Dipropylenglycol, Propyldiglycol, Butyldiglykol, Hexylenglycol, Diethylenglykolethylether, Diethylenglykolmethylether, Diethylenglykol-n-butylether, Diethylenglykolhexylether, Diethylenglykol-n-butyletheracetat, Ethylenglykolpropylether, Ethylenglykol-n-butylether, Ethylenglykolhexylether, Ethylenglykol-n-butyletheracetat, Triethylenglycol, Triethylenglykolmethylether, Triethylenglykolethylether, Triethylenglykol-n-butylether, Ethylenglykolphenylether, Propylenglykolmethylether, Dipropylenglykolmethylether, Tripropylenglycolmethylether, Propylenglycolmethyletheracetat, Dipropylenglykol-methyletheracetat, propylenglykol-n-propylether, Dipropylenglykol-n-propylether, Propylenglycol-n-butylether, Dipropylenglycol-n-butylether, Tripropylenglykol-n-butylether, Propylenglykolphenylether, Propylenglykoldiacetat, Dipropylenglykoldimethylether, Methoxytriglykol, Ethoxytriglykol, Butoxytriglykol, 1-Butoxyethoxy-2-propanol, 3-Methyl-3-methoxybutanol, Propylen-glykol-t-butylether, Di-n-octylether, vorzugsweise aus der Gruppe Glycerin, Propylenglycol und Dipropylenglycol, insbesondere aus der Gruppe Dipropylenglycol.

Der Gewichtsanteil des wassermischbaren organischen Lösungsmittels am Gesamtgewicht der in Schritt e) ausgebrachte Schmelze beträgt, bezogen auf ihr Gesamtgewicht, vorzugsweise 0,2 bis 10 Gew.-%, insbesondere 0,5 bis 5,0 Gew.-%.

Zusammenfassend ist ein besonders bevorzugter Gegenstand dieser Anmeldung ein Verfahren, umfassend:
a) Erzeugen einer Schmelze von Natriumacetat Trihydrat;
b) Zudosieren
   - mindestens eines Rheologiemodifikators sowie
   - mindestens eines Emulgators
c) Zudosieren
   - mindestens eines Parfümöls sowie
   - mindestens einer Duftstoffkapsel sowie
   - mindestens eines Farbstoffs;
d) Zuleiten der Schmelze zu einem Tropfenformer mit rotierender, gelochter Außentrommel;
e) Ausbringen von Tropfen der Schmelze auf ein Kühlband mittels des Tropfenformers,
wobei das aus dem Tropfenformer ausgebrachte Gemisch ein Gewichtsverhältnis von Wasser zu Natriumacetat von 0,63 oder darüber, vorzugsweise von 0,67 oder darüber aufweist.

Wie eingangs ausgeführt, begründet das spezifische Gewichtsverhältnis von Wasser zu Natriumacetat von 0,63 oder darüber, insbesondere von 0,67 oder darüber die vorteilhaften Eigenschaften sowohl des Verfahrens als auch der Verfahrensprodukte. Die Einstellung und Einhaltung dieses Gewichtsverhältnisses ist aus diesem Grunde für die Verfahrensführung von grundlegender Bedeutung. Die Erfassung des Wassergehalts der Schmelze erfolgt in einer bevorzugten Verfahrensvariante sensorisch.

In Ergänzung zur sensorischen Erfassung des Wassergehalts oder auch also eigenständige bevorzugte Variante des erfindungsgemäßen Verfahrens wird der Wassergehalt der Schmelze im Verfahrensverlauf, insbesondere nach dem Schritt a), durch Wasserzugabe variiert.

Wird die Schmelze in Schritt a) in einem ersten Behälter hergestellt und nachfolgend mittels einer Rohrleitung dem Tropfenformer zugeleitet, so ist es bevorzugt, das Wasser der Schmelze in der Rohrleitung zwischen erstem Behälter und Tropfenformer zuzudosieren.

Um den Wassergehalt in der Schmelze konstant zu halten ist es bevorzugt, wenn die Luftfeuchtigkeit im Luftraum oberhalb der Schmelze in dem ersten Behälter um weniger als 10%, vorzugsweise um weniger als 5% von der Luftfeuchtigkeit abweicht, welche sich im Gleichgewicht oberhalb der Schmelze im ersten Behälter bildet. Alternativ oder in Ergänzung ist es ebenfalls bevorzugt, wenn die Luftfeuchtigkeit im Luftraum um die Austrittsöffnungen des Tropenformers um weniger als 10%, vorzugsweise um weniger als 5% von der Luftfeuchtigkeit abweicht, welche sich im Gleichgewicht oberhalb der aus den Austrittsöffnungen austretenden Schmelze bildet.

Die Rohrleitung zwischen dem ersten Behälter und dem Tropfenformer weist vorzugsweise einen statischen Mischer auf. Die Länge des in der Rohrleitung angebrachten statischen Mischers in Fließrichtung der Schmelzdispersion beträgt vorzugsweise mindestens das 10-fache, bevorzugt mindestens das 20-fache und insbesondere mindestens das 50-fache des Durchmessers der Rohrleitung. Als Durchmesser der Rohrleitung wird deren Innendurchmesser ohne Berücksichtigung der Wanddicke bezeichnet.

In Schritt d) des Verfahrens wird die Schmelze einem Tropfenformer mit rotierender, gelochter Außentrommel zugeleitet. Der Abschnitt der Rohrleitung, welcher sich innerhalb der Trommel des Tropfenformers befindet wird nachfolgend zur Unterscheidung von der vorherigen Rohrleitung als Zuführkanal bezeichnet. Der Zuführkanal erstreckt sich vorzugsweise über mindestens 80%, besonders bevorzugt über mindestens 90% und insbesondere über 100% der Länge der Trommel des Tropfenformers.

Die in den Zuführkanal eingeleitete Schmelze tritt aus dem Zuführkanal vorzugsweise durch an der Unterseite des Zuführkanals befindliche Bohrungen aus dem Zuführkanal auf eine Verteiler- oder Düsenleiste aus, welche ihrerseits an der Innenseite der rotierenden, gelochten Außentrommel anliegt. Die Schmelze durchläuft die Verteiler- oder Düsenleiste und wird nachfolgend aus den Löcher der rotierenden Außentrommel auf ein unterhalb dieser Löcher befindliches Kühlband ausgebracht. Der Abstand zwischen der Außenseite der rotierenden, gelochten Außentrommel und der Oberfläche des Kühlbandes beträgt vorzugsweise zwischen 5 und 20 mm.

Zur weiteren Verbesserung der Durchmischung der Schmelze und zur Verhinderung oder Minimierung von Sedimentation kann im Zuführkanal ein weiterer Mischer angeordnet sein. Bevorzugt handelt es sich dabei um einen dynamischen Mischer, beispielsweise eine innerhalb des Zuführkanals drehbar angeordnete Wendel.

Die Verweilzeit der Schmelze in der Rohrleitung bis zum Austritt aus der rotierenden, gelochten Außentrommel des Tropfenformers beträgt vorzugsweise weniger als 20 Sekunden, besonders bevorzugt weniger als 10 Sekunden und insbesondere zwischen 0,5 und 5 Sekunden.

In Schritt e) des Verfahrens werden Tropfen der Schmelze mittels des Tropfenformers auf ein Kühlband ausgebracht. Die Viskosität (Texas Instruments AR-G2 Rheometer; Platte/Platte, 4cm Durchmesser, 1100um Spalte; Scherrate 10/1sec) der Schmelze bei Austritt aus der rotierenden, gelochten Außentrommel beträgt vorzugsweise zwischen 1000 und 10000 mPas.

In einer bevorzugten Verfahrensvariante erstarren die in Schritt e) ausgebrachten Tropfen zu Schmelzkörpern. Die Zeitspanne, während der die in Schritt e) ausgebrachten Tropfen auf dem Kühlband verbleiben beträgt vorzugsweise von 20 bis 120 Sekunden, besonders bevorzugt von 30 bis 100 Sekunden und insbesondere von 40 bis 80 Sekunden.

Die Verfestigung der Tropfen auf dem Kühlband wird vorzugsweise durch eine aktive Kühlung unterstützt und beschleunigt. Die Kühlung der auf das Kühlband ausgebrachten Tropfen kann direkt oder indirekt erfolgen. Als direkte Kühlung ist beispielsweise eine Kühlung mittels Kaltluft einsetzbar. Bevorzugt ist jedoch die indirekte Kühlung der Tropfen durch Kühlung der Unterseite des Kühlbandes mittels Kaltwasser.

Überraschenderweise wurde festgestellt, dass das zuvor beschriebene Gewichtsverhältnis von Wasser zu Natriumacetat von 0,67 oder darüber sich weiterhin auch vorteilhaft auf die Lagerfähigkeit der Schmelzkörper, insbesondere auf die Lagerfähigkeit bei Schütthöhen oberhalb 40 cm, beispielweise bei Schütthöhen oberhalb 80 cm oder oberhalb 120 cm oder oberhalb 200 cm auswirkt. Schmelzkörper mit einem entsprechenden Gewichtsverhältnis zeichnen sich insbesondere nach einer Verweilzeit auf dem Kühlband oberhalb 40 Sekunden, bevorzugt oberhalb 60 Sekunden und insbesondere oberhalb 80 Sekunden auch nach langer Lagerzeit durch eine gute Schütt- und Rieselfähigkeit aus.

Die mittels des zuvor beschriebenen Verfahrens hergestellten Schmelzkörper können jede beliebige Form haben. Die Formgebung erfolgt dabei insbesondere im Anschluss an Schritt e) des beschriebenen Verfahrens. Bevorzugt sind feste, partikuläre Formen, wie beispielsweise um im Wesentlichen sphärische, figürliche, schuppen-, quader-, zylinder-, kegel-, kugelkalotten- bzw linsen-, hemisphären-, scheibchen- oder nadelförmige Partikel. Beispielsweise können die Partikel eine Gummibärchen-artige, figürliche Ausgestaltung haben. Aufgrund ihrer Konfektionierungseigenschaften und ihres Leistungsprofils sind hemisphärische Partikel besonders bevorzugt. Das zuvor beschriebene Verfahren eignet sich insbesondere zur Herstellung von Schmelzkörpern, welche eine hemisphärische Gestalt aufweisen und ein Verhältnis von Höhe zu Durchmesser von 0,25 bis 0,65 bevorzugt von 0,35 bis 0,45 besitzen.

Schmelzkörper mit einem maximalen Durchmesser zwischen 4 und 15 mm, vorzugsweise zwischen 5 und 10 mm aufweisen zeichnen sich aufgrund ihrer Ästhetik durch eine erhöhte Kundenakzeptanz aus und sind bevorzugt. Um das zuvor beschriebene ästhetische Kundenbedürfnis zu erfüllen ist es insbesondere bevorzugt, wenn mindestens 20 Gew.-%, vorzugsweise zu mindestens 40 Gew-%, besonders bevorzugt zu mindestens 60 Gew.-% und insbesondere bevorzugt zu mindestens 80 Gew.- % der mittels des zuvor beschriebenen Verfahrens hergestellten Schmelzkörper in jeder beliebigen Raumrichtung einen maximalen Durchmesser zwischen 4 und 15 mm, vorzugsweise zwischen 5 und 10 mm aufweisen.

Schließlich hat es sich für die Dosierung der Schmelzkörper und deren Duftwirkung als vorteilhaft erwiesen, wenn die mittels des Verfahrens hergestellten Schmelzkörper ein Gewicht zwischen 2 und 150 mg, vorzugsweise zwischen 4 und 60 mg und insbesondere zwischen 5 und 10 mg aufweisen. Bevorzugte Verfahren sind dadurch gekennzeichnet, dass mindestens 20 Gew.-%, vorzugsweise mindestens 40 Gew-%, besonders bevorzugt mindestens 60 Gew.-% und insbesondere bevorzugt mindestens 80 Gew.-% der mittels des Verfahrens hergestellten Schmelzkörper ein Gewicht zwischen 2 und 150 mg, vorzugsweise zwischen 4 und 60 mg und insbesondere zwischen 5 und 10 mg aufweisen.

In der Anmeldung Anmeldung sind weiter Schmelzkörper umfassend
(a) Natriumacetat Trihydrat als Trägermaterial
(b) gegebenenfalls weitere optionale Inhaltsstoffe
(c) gegebenenfalls weitere optionale Ästhetika
wobei der Schmelzkörper ein Gewichtsverhältnis von Wasser zu Natriumacetat von 0,63 oder darüber aufweist. offenbart

Besonders bevorzugte Schmelzkörper weisen ein Gewichtsverhältnis von Wasser zu Natriumacetat von 0,67 oder darüber, bevorzugt zwischen 0,67 und 0,75, vorzugsweise zwischen 0,67 und 0,73 und insbesondere zwischen 0,67 und 0,69 auf.

Die Zusammensetzung einiger bevorzugter, mittels des zuvor beschriebenen Verfahren hergestellten Schmelzkörper sind der nachfolgenden Tabelle zu entnehmen. Selbstverständlich lassen sich diese Schmelzkörper auch mittels alternativer Verfahren herstellen. Die Schmelzkörper weisen ein Gewichtsverhältnis von Wasser zu Natriumacetat von 0,63 oder darüber, bevorzugt von 0,67 oder darüber, vorzugsweise zwischen 0,67 und 0,75, besonders bevorzugt zwischen 0,67 und 0,74 und insbesondere zwischen 0,68 und 0,72 auf.

| | Formel 1 | Formel 2 | Formel 3 | Formel 4 | Formel 5 |
|---|---|---|---|---|---|
| Natriumacetat Trihydrat | 30 bis 95 | 40 bis 90 | 40 bis 90 | 40 bis 90 | 45 bis 80 |
| Rheologiemodifikator | 2,0 bis 40 | 2,0 bis 40 | 2,0 bis 40 | 4,0 bis 35 | 4,0 bis 35 |
| Emulgator | 0,2 bis 5,0 | 0,2 bis 5,0 | 0,2 bis 5,0 | 0,4 bis 3,0 | 0,4 bis 3,0 |
| Parfümöl | 0,01 bis 2,0 | 0,01 bis 2,0 | 0,02 bis 1,5 | 0,02 bis 1,5 | 0,05 bis 1,0 |
| Misc | ad 100 | ad 100 | ad 100 | ad 100 | ad 100 |

| | Formel 6 | Formel 7 | Formel 8 | Formel 9 | Formel 10 |
|---|---|---|---|---|---|
| Natriumacetat Trihydrat | 30 bis 95 | 40 bis 90 | 40 bis 90 | 40 bis 90 | 45 bis 80 |
| Rheologiemodifikator | 2,0 bis 40 | 2,0 bis 40 | 2,0 bis 40 | 4,0 bis 35 | 4,0 bis 35 |
| Emulgator | 0,2 bis 5,0 | 0,2 bis 5,0 | 0,2 bis 5,0 | 0,4 bis 3,0 | 0,4 bis 3,0 |
| Duftstoffkapseln | 0,1 bis 5,0 | 0,1 bis 5,0 | 0,2 bis 3,5 | 0,2 bis 3,5 | 0,2 bis 3,5 |
| Misc | ad 100 | ad 100 | ad 100 | ad 100 | ad 100 |

| | Formel 11 | Formel 12 | Formel 13 | Formel 14 | Formel 15 |
|---|---|---|---|---|---|
| Natriumacetat Trihydrat | 30 bis 95 | 40 bis 90 | 40 bis 90 | 40 bis 90 | 45 bis 80 |
| Rheologiemodifikator | 2,0 bis 40 | 2,0 bis 40 | 2,0 bis 40 | 4,0 bis 35 | 4,0 bis 35 |
| Emulgator | 0,2 bis 5,0 | 0,2 bis 5,0 | 0,2 bis 5,0 | 0,4 bis 3,0 | 0,4 bis 3,0 |
| Parfümöl | 0,01 bis 2,0 | 0,01 bis 2,0 | 0,02 bis 1,5 | 0,02 bis 1,5 | 0,05 bis 1,0 |
| Duftstoffkapseln | 0,1 bis 5,0 | 0,1 bis 5,0 | 0,2 bis 3,5 | 0,2 bis 3,5 | 0,2 bis 3,5 |
| Misc | ad 100 | ad 100 | ad 100 | ad 100 | ad 100 |

## Patentansprüche

1. Verfahren, umfassend:
a) Erzeugen einer Schmelze von Natriumacetat Trihydrat;
b) gegebenenfalls Zudosieren weiterer optionaler Inhaltsstoffe;
c) Zudosieren mindestens eines Parfümöls und/oder Duftstoffkapseln;
d) Zuleiten der Schmelze zu einem Tropfenformer mit rotierender, gelochter Außentrommel;
e) Ausbringen von Tropfen der Schmelze auf ein Kühlband mittels des Tropfenformers,
wobei das aus dem Tropfenformer ausgebrachte Gemisch ein Gewichtsverhältnis von Wasser zu Natriumacetat von 0,63 oder darüber aufweist.

2. Verfahren nach Anspruch 1, wobei die in Schritt e) ausgebrachte Schmelze, bezogen auf ihr Gesamtgewicht, das Natriumacetat Trihydrat in einer Menge von 30 bis 95 Gew.-%, vorzugsweise von 40 bis 90 Gew.-%, insbesondere von 45 bis 80 Gew.-% enthält.

3. Verfahren nach einem der vorherigen Ansprüche, wobei die in dem ersten Behälter erzeugte Schmelze ein Gewichtsverhältnis von Wasser zu Natriumacetat oberhalb von 0,67, bevorzugt zwischen 0,67 und 0,75, vorzugsweise zwischen 0,67 und 0,74, insbesondere zwischen 0,68 und 0,72 aufweist.

4. Verfahren nach einem der vorherigen Ansprüche, wobei das aus dem Tropfenformer ausgebrachte Gemisch ein Gewichtsverhältnis von Wasser zu Natriumacetat oberhalb von 0,67, bevorzugt zwischen 0,67 und 0,75, vorzugsweise zwischen 0,67 und 0,74, insbesondere zwischen 0,68 und 0,72 aufweist.

5. Verfahren nach einem der vorherigen Ansprüche, wobei der Wassergehalt der Schmelze im Verfahrensverlauf durch Wasserzugabe variiert wird.

6. Verfahren nach Anspruch 5, bei welchem die Schmelze in Schritt a) in einem ersten Behälter hergestellt und mittels einer Rohrleitung dem Tropfenformer zugeleitet wird, wobei das Wasser der Schmelze in der Rohrleitung zwischen erstem Behälter und Tropfenformer zudosiert wird.

7. Verfahren nach einem der vorherigen Ansprüche, wobei die in Schritt e) ausgebrachten Tropfen zu Schmelzkörpern erstarren.

## Claims

1. A process comprising:
a) producing a melt of sodium acetate trihydrate;
b) optionally dosing of further optional ingredients;
c) dosing at least one perfume oil and/or fragrance capsules;
d) feeding the melt to a drop former with a rotating, perforated outer drum;
e) discharging drops of the melt onto a cooling belt by means of the drop former,
wherein the mixture discharged from the drop former has a weight ratio of water to sodium acetate of 0.63 or above.

2. Process according to claim 1, wherein the melt discharged in step e) contains, based on its total weight, the sodium acetate trihydrate in an amount of from 30 to 95% by weight, preferably from 40 to 90% by weight, in particular from 45 to 80% by weight.

3. Process according to any one of the preceding claims, wherein the melt produced in the first container has a weight ratio of water to sodium acetate above 0.67, preferably between 0.67 and 0.75, preferably between 0.67 and 0.74, in particular between 0.68 and 0.72.

4. Process according to any one of the preceding claims, wherein the mixture discharged from the drop former has a weight ratio of water to sodium acetate above 0.67, preferably between 0.67 and 0.75, preferably between 0.67 and 0.74, in particular between 0.68 and 0.72.

5. Process according to one of the preceding claims, wherein the water content of the melt is varied during the course of the process by adding water.

6. Process according to claim 5, in which the melt is produced in step a) in a first container and is fed to the drop former by means of a pipeline, the water being dosed to the melt in the pipeline between the first container and the drop former.

7. Process according to one of the preceding claims, wherein the droplets discharged in step e) solidify to form molten bodies.

## Revendications

1. Procédé comprenant:
a) la production d'une masse fondue d'acétate de sodium trihydraté;
b) éventuellement, ajouter d'autres ingrédients facultatifs;
c) ajout d'au moins une huile de parfum et/ou de capsules de parfum;
d) acheminement de la masse fondue vers un dispositif de formation de gouttes doté d'un tambour extérieur rotatif et perforé
e) distribution des gouttes de la masse fondue sur un bain de refroidissement au moyen du formeur de gouttes,
dans lequel le mélange déchargé du formeur de gouttes présente un rapport pondéral eau/acétate de sodium de 0,63 ou plus.

2. Procédé selon la revendication 1, dans lequel la masse fondue sortie à l'étape e) contient, par rapport à son poids total, l'acétate de sodium trihydraté en une quantité de 30 à 95 % en poids, de préférence de 40 à 90 % en poids, en particulier de 45 à 80 % en poids.

3. Procédé selon l'une quelconque des revendications précédentes, dans lequel la masse fondue produite dans le premier récipient présente un rapport pondéral eau/acétate de sodium supérieur à 0,67, de préférence compris entre 0,67 et 0,75, de préférence compris entre 0,67 et 0,74, notamment compris entre 0,68 et 0,72.

4. Procédé selon l'une quelconque des revendications précédentes, dans lequel le mélange évacué du formeur de gouttes présente un rapport pondéral eau/acétate de sodium supérieur à 0,67, de préférence compris entre 0,67 et 0,75, de préférence compris entre 0,67 et 0,74, en particulier compris entre 0,68 et 0,72.

5. Procédé selon l'une quelconque des revendications précédentes, dans lequel on fait varier la teneur en eau de la masse fondue au cours du procédé par ajout d'eau.

6. Procédé selon la revendication 5, dans lequel la masse fondue est préparée à l'étape a) dans un premier récipient et est amenée au formeur de gouttes au moyen d'une tuyauterie, l'eau étant dosée à la masse fondue dans la tuyauterie entre le premier récipient et le formeur de gouttes.

7. Procédé selon l'une quelconque des revendications précédentes, dans lequel les gouttes produites à l'étape e) se solidifient pour former des corps fondus.
